# EUROPEAN PATENT APPLICATION

(11) **EP 4 283 952 A1**
(43) Date of publication of application: **29.11.2023**
(21) Application number: 23174622.3
(22) Date of filing: 22.05.2023
(51) Int. Cl.: H04L 61/4511, H04L 9/40, G06N 20/10

(54) **DOMAIN NAME SYSTEM TUNNELING DETECTION**

(30) Priority: 26.05.2022 US 202217825823
(71) Applicant: BlackBerry Limited, Waterloo, Ontario N2K 0A7 (CA)
(72) Inventor: BHATNAGAR, Anant, Waterloo, N2K 0A7 (CA); MISHRA, Durgesh Omprakash, Waterloo, N2K 0A7 (CA); SIRCAR, Shiladitya, Waterloo, N2K 0A7 (CA)
(74) Representative: MERH-IP Matias Erny Reichl Hoffmann Patentanwälte PartG mbB

(57) **Abstract**

Systems, methods, and software can be used to detect domain name system tunneling (DNST). In some aspects, a method comprises: receiving a plurality of domain name system (DNS) requests to access one or more domains; processing, by using a machine learning model, the plurality of DNS requests to determine one or more suspicious DNS requests among the plurality of DNS requests; and processing, by using a statistical analysis model, the one or more suspicious DNS requests to determine whether the one or more suspicious DNS requests are potentially malicious DNS requests.

## Description

### TECHNICAL FIELD

This disclosure relates generally to the computer and networking security field, and more particular, to detecting domain name system (DNS) tunneling.

### BACKGROUND

DNS can be used to resolve a particular domain name to its Internet Protocol (IP) equivalent. Each domain name can be associated with a particular IP address. IP address lookups are performed by DNS servers. A website address is associated with one or more name servers which are responsible for resolving the IP address of the website. A seemingly benign DNS traffic can be abused by cyber criminals to transfer exploits from a victim's endpoint. Using DNS to open a side channel for transferring sensitive information from a victim's computer is called DNS tunneling (DNST).

### DESCRIPTION OF DRAWINGS

FIG. 1 is a schematic diagram showing an example system that performs DNST detection, according to an implementation.
FIG. 2 is a flowchart illustrating an example process of detecting DNST, according to an implementation.
FIG. 3 is a graph showing example DNS traffic, according to an implementation.
FIG. 4 is a flowchart showing an example method example process of generating transformed vectors, according to an implementation.
FIG. 5A is a graph showing an example result of DNST detection without Fourier transform, according to an implementation.
FIG. 5B is a graph showing an example result of DNST detection with Fourier transform, according to an implementation.
FIG. 6 is a graph showing a plot of standard deviation entropy versus mean entropy for DNS requests, according to an implementation.
FIG. 7 is a graph showing a t-distributed stochastic neighbor embedding (t-SNE) plot of entropy vectors corresponding to DNS requests, according to an implementation.
FIG. 8 is a graph showing a t-SNE plot of transformed vectors corresponding to DNS requests, according to an implementation.
FIG. 9 is a graph showing a plot of frequency versus unique domains per DNS request that are observed during a predetermined time period, according to an implementation.
FIG. 10 is a graph showing a plot of unique subdomains versus total DNS requests for domains, according to an implementation.
FIG. 11 is a graph showing a plot of a ratio of unique subdomains to total DNS requests versus the unique domains for domains, according to an implementation.
FIG. 12 is a block diagram of an example computer system, according to an implementation.

### DETAILED DESCRIPTION

Computers on the Internet, from a smartphone or laptop to servers that serve content for massive websites, can find and communicate with one another by using IP addresses. The Internet's DNS system performs IP address lookup by managing a mapping between domain names and IP addresses. Each domain name is associated with a particular IP address. These IP address lookups are performed by DNS servers. A DNS server can resolve a domain name to its IP equivalent. DNS servers can include root name servers, top level domain (TLD) name server, and authoritative name servers. An example DNS process can be performed as follows. First, a DNS request is obtained by a user equipment (UE) in response to a user entering a website in a web browser. The UE may search its own DNS caches to see if requested information (e.g. an IP address of the website) is already stored locally. If not, the DNS request is routed to a DNS resolver. The DNS resolver may be managed by the user's Internet service provider (ISP), such as a cable Internet provider, a digital subscriber line (DSL) broadband provider, or a corporate network, etc.

If the DNS request is routed to the DNS resolver, the DNS resolver may check its own cache to determine if the requested information is already stored locally in the DNS resolver. If the requested information is stored locally in the DNS solver, the DNS resolver may return the requested information to the UE. If the requested information is not stored locally in the DNS resolver, the DNS resolver may continue to route the DNS request to a root name server. The root name server may determine a TLD based on the DNS request and send information about the TLD back to the DNS resolver. In some cases, the information about the TLD can indicate a TLD server configured for the TLD. Then, the DNS resolver determines the TLD server based on the information about the TLD and queries the TLD server for the requested information. The TLD server may provide the DNS resolver with information of an authoritative name server. The DNS resolver can query the authoritative name server to obtain the requested information. After obtaining the requested information, the DNS resolver may cache the requested information and return it to the UE.

DNS tunneling (DNST) involves abuse of an underlying DNS protocol, for example, by using DNS requests to implement a command and control channel for malware. Inbound DNS traffic can carry commands to the malware, while outbound traffic can infiltrate a user's computer to extract sensitive data or provide responses to the malware operator's requests. A subdomain included in the DNS request can be used to carry sensitive information. Malicious DNS requests can be designed to go to attacker-controlled DNS servers, allowing the cyber attackers to receive the DNS requests and return DNS replies. Some indicators of DNST on a network can include unusual DNS requests, requests for unusual domains, and high DNS traffic volume, etc. An unusual DNS request may include unusual data encoded within a domain name. Inspection of the domain name within DNS requests may enable differentiation of legitimate traffic from attempted DNST. A request for unusual domains may include domain names that are suspiciously owned by cyber attackers. If a system or computer is experiencing a sudden surge in requests for an unusual domain, it may indicate DNST, especially if that domain was only created recently. High DNS traffic volume can be indicated by spikes in DNS traffic. Because a domain name within a DNS request usually has a maximum size (e.g., 253 characters), an attacker likely will need a large number of malicious DNS requests to perform data exfiltration or implement a highly-interactive command and control protocol. The resulting spike in DNS traffic can be an indicator of DNST. Protection against DNST includes detection and blocking of attempted data exfiltration. Example DNST detection systems and methods are described in greater detail below.

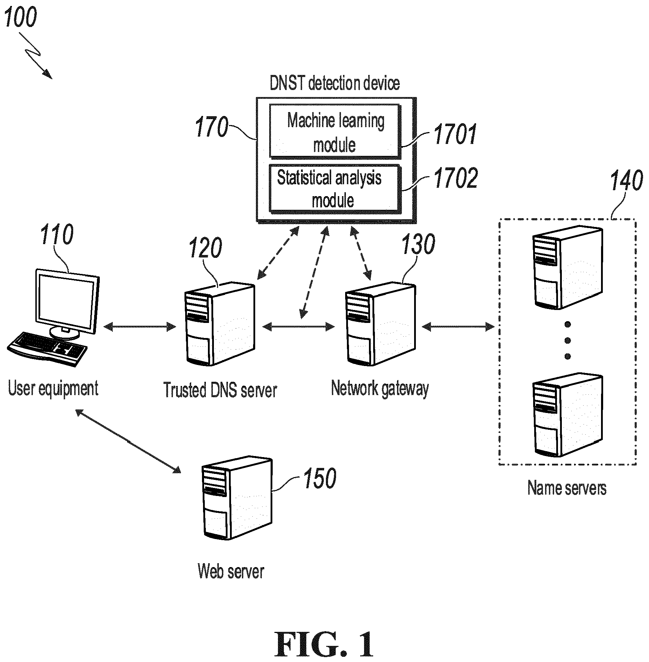

FIG. 1 is a schematic diagram showing an example system 100 that performs DNST detection, according to an implementation. The system 100 is an example of a system implemented as computer programs on one or more computers in one or more locations, in which the systems, components, and techniques described below can be implemented. While elements of the system 100 are shown as including various component parts, portions, or modules that implement various features and functionality, nevertheless, these elements may instead include a number of submodules, third-party services, components, libraries, and such, as appropriate. Furthermore, the features and functionality of various components can be combined into fewer components or divided into more components as appropriate.

At a high level, system 100 can be configured to detect DNST based on machine learning models/algorithms combined with statistical analysis. In some cases, the machine learning model as described herein can be a support vector machine (SVM) model. In some cases, the machine learning model can be an artificial neural network (ANN). In some cases, the machine learning model can be any suitable machine learning model to be used for DNST. In the description below with reference to FIGS. 1-12, the SVM model is used as an example. In some cases, individual subdomains (e.g., resource records in DNS protocol) carried in DNS traffic can be analyzed by determining high entropy characters in the subdomains, computing entropy vectors based on the characters, and performing Fourier transform on the entropy vectors to generate transformed vectors. The transformed vectors may be fed to a SVM to classify suspicious DNS traffic from normal ones. DNST has few characteristics which makes it suitable for statistical analysis. DNST may make use of subdomains for transferring encrypted and encoded sensitive information from a victim's computer. A sample of normal DNS traffic for a particular domain can have lots of duplicate queries (e.g., DNS requests having duplicate subdomains). On the other hand, suspicious DNS traffic routed to a malicious domain tend to have a large number of unique subdomains (e.g., non-duplicate subdomains). A ratio of the number of unique subdomains to a total number of DNS requests observed within a predetermined time period for a domain can be used to determine whether the domain is a potentially malicious domain. Combining a statistical approach based on the computed ratio with the SVM can improve accuracy in DNST detection.

In an example DNST detection process with reference to the system 100, a UE 110 may send a DNS request to a trusted DNS server 120. The DNS request may include a web address. The trusted DNS server 120 can be configured as a DNS resolver that acts as an intermediary between the UE 110 and the name servers 140. In one example, the trusted DNS server 120 may be configured to receive DNS requests from and return DNS responses to the UE 110. The trusted DNS server 120 can be configured to perform initial processing on a DNS request from the UE 110 and determine whether a response to the DNS request is already stored locally, e.g., in a memory cache of the trusted DNS server 120. If the response is already cached locally, the trusted DNS server 120 may send the cached response to the UE 110. If the response is not already cached locally, the trusted DNS server 120 may route the DNS request to a name server 140 via a network gateway 130.

In some cases, the network gateway 130 is configured to provide a connection between the trusted DNS server 120 and one or more name servers 140. In some cases, the trusted DNS server can be implemented in a first network, and the name servers 140 can be implemented in a second network. The network gateway 130 may be configured to provide a connection between the first and second networks to allow data transmission between the two networks. The network gateway 130 may be a wireless router, a wireless access point, a modem cum router, a set-top box, a zero trust network access (ZTNA) point, or any suitable computing device.

The name servers 140 can include one or more root name servers, one or more TLD name servers, and one or more authoritative name servers. In one example, a root name server may be a name server for a root zone of the DNS of the Internet. A root name server may be configured to store addresses of TLD name servers. A root name server can directly answer queries for records stored or cached within the root zone, and also refer other requests to an appropriate TLD server. In one example, a root name server may accept a DNS resolver's query which includes a domain name, and respond by directing the DNS resolver to a TLD name server based on the extension of the domain name. TLD name servers are at a relatively lower hierarchy than root name servers in the DNS hierarchy. A TLD name server may be configured to store TLD specific records, e.g., by maintaining information for domain names that share a common domain extension. When a DNS resolver receives a response from a TLD name server, the DNS resolver may be directed to an authoritative name server indicated in the response. An authoritative name server may contain information specific to a domain name it serves and provide the DNS resolver with information about a requested IP address that is directed to a web server.

In response to receiving a DNS request routed by the trusted DNS server 120 and the network gateway 130, a root name server 140 may provide the trusted DNS server 120 with information about a TLD name server 140 based on information contained in the DNS request. Then, the trusted DNS server 120 may send a DNS request to the TLD name server 140 based on a response from the root name server 140. The TLD name server 140 may respond to the trusted DNS server 120 with information about an authoritative name server 140. Again, the trusted DNS server 120 may send a DNS request to the authoritative name server 140 based on a response from the TLD name server 140. The authoritative name server 140 may return a requested IP address to the trusted DNS server 120. The trusted DNS server 120 may forward the requested IP address to the UE 110. The trusted DNS server 120 may further cache the requested IP address for a predetermined time. The IP address may be directed to a web server 150. After receiving the IP address from the trusted DNS server 120, the UE 110 may send a web request to the web server 150 based on theIP address. The web server 150 may respond with the requested web content to the UE 110.

During a DNS process, a cyber-attacker may configure the cyber-attacker's own computer as a name server 140 to perform DNST. A DNS request sent by the UE 110 may be routed to the cyber-attacker's own computer, which in turn may respond with encoded response that includes malware used to compromise data security of the UE 110.

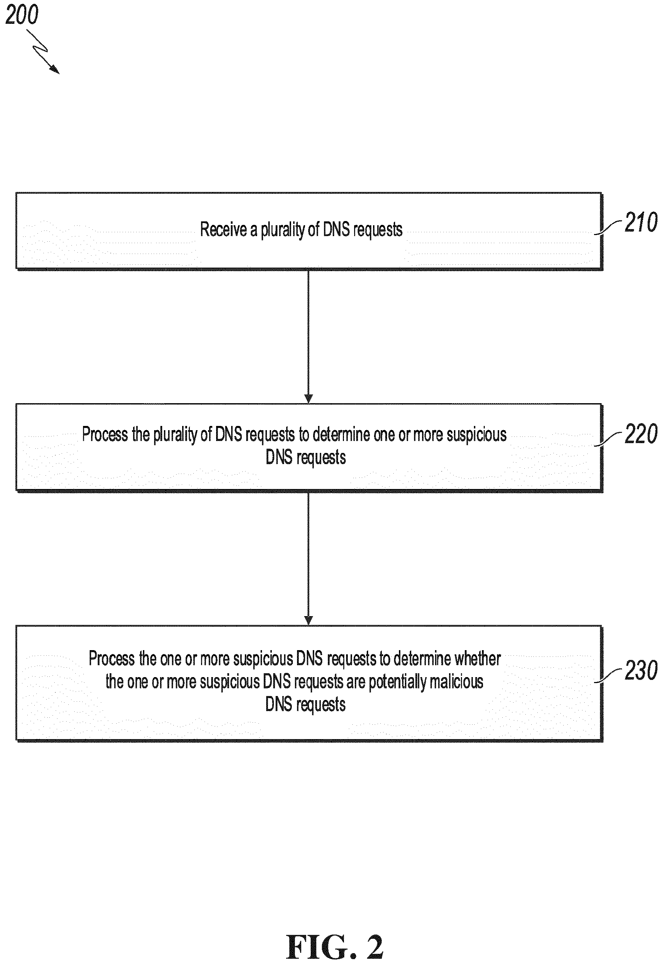

As shown, a DNST detection device 170 is configured to include a machine learning module 1701 and a statistical analysis module 1702. In some cases, the machine learning module 1701 can be configured to process DNS requests using a machine learning (e.g., SVM, or ANN, etc.) model. The SVM model is used below as an example of the machine learning model in the methods and systems as described herein. The SVM model may be implemented using a supervised machine learning algorithm for classification. In one example, classification may be performed using the SVM model on the DNS requests to determine suspicious DNS requests. The machine learning module 1701 can be configured to analyze subdomains of the DNS requests, compute entropies of characters of the subdomains, generate entropy vectors, and perform Fourier transform on the entropy vectors. The transformed vectors may be fed to the SVM model. The machine learning module 1701 can use the SVM model to determine suspicious DNS requests based on the transformed vectors. Determination of the suspicious DNS requests will be discussedbelow in greater detail with reference to FIG. 2.

Continuing with the above example, statistical analysis may be further performed on the suspicious DNS requests to determine whether any one of the suspicious DNS requests is a potentially malicious DNS request. In some cases, the statistical analysis module 1702 can be configured to perform statistical analysis on DNS requests using a statistical analysis model. In one example, the statistical analysis module 1702 may obtain suspicious domains contained in the suspicious requests, compute a ratio of unique subdomains to a total number of DNS requests observed for a suspicious domain during a predetermined time period, and determine whether the suspicious domain is a potentially malicious domain based on the computed ratio. A malicious DNS request may then be determined as a DNS request that contains a potentially malicious domain. Statistical analysis of the DNS requests will be discussed below in greater detail with reference to FIG. 2.

In some cases, the DNST detection device 170 is further configured to provide remedial actions in response to detection of DNST. For example, the DNST detection device 170 may decline or block a DNS request in response to determining that the DNS request is a potentially malicious DNS request. The DNST detection device 170 may add a potentially malicious domain to a black list and block all DNS traffic related to the potentially malicious domain.

In some cases, the DNST detection device 170 can be communicatively connected to the trusted DNS server 120 and/or the network gateway 130. In some cases, the DNST detection device 170 can be implemented as a device different from a device on which the trusted DNS server 120 or the network gateway 130 is implemented. For example, the DNST detection device 170 can be configured as a device connected externally to the trusted DNS server 120 and the network gateway 130. In some cases, the DNST detection device 170 can be configured as a connection device between the trusted DNS server 120 and the network gateway 130. In some cases, the DNST detection device can be implemented on a same device on which the trusted DNS server 120 or the network gateway 130 is implemented.

FIG. 2 a flowchart illustrating an example process 200 of detecting DNST, according to an implementation. For convenience, the process 200 will be described as being performed by a system of one or more computers located in one or more locations. For example, a system, e.g., the system 100 of FIG. 1, appropriately programmed, can perform the process 200. The process 200 shown in FIG. 2 may also be implemented using additional, fewer, or different operations, which can be performed in the order shown or in a different order.

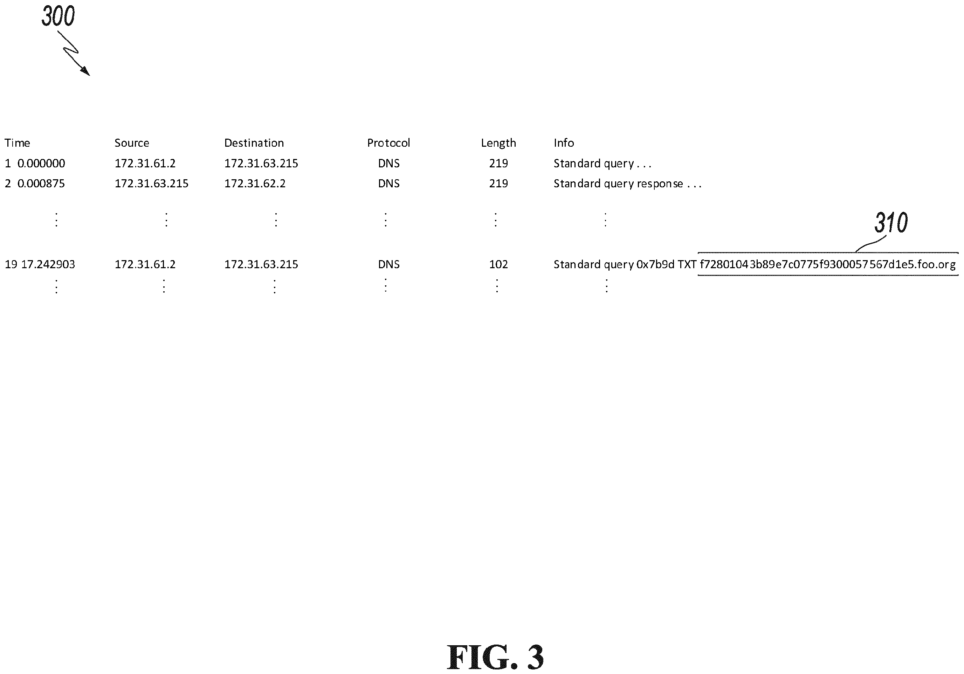

The process 200 may begin at step 210, where a plurality of DNS requests are received. In one example with reference to FIG. 1, the DNST detection device 170 may periodically obtain DNS requests from the trusted DNS server 120 and/or the network gateway 130. In some cases, a DNS request can include a domain and a subdomain. A subdomain is a piece of information added to the beginning of a domain. The subdomain allows a website to separate and organize content for a specific function. A domain may include a domain name and a domain extension. Example DNS traffic including DNS request and responses is shown in FIG. 3. As shown, the DNS request 310 includes a domain "foo.org" and a subdomain "f72801043b89e7c0775f9300057567dle5". The domain "foo.org" includes a domain name "foo" and a domain extension "org". In some cases, the domain extension of a domain may refer to a top level domain (TLD), and the domain name of the domain may refer to a second level domain (SLD). Continuing with the above example, the domain name "foo" may be a SLD, and the domain extension "org" may be a TLD. In some cases, the received DNS requests may include one or more domains. In the examples shown in FIG. 3, the DNS requests include a first domain "foobar.org" and a second domain "foo.org".

Referring back to FIG. 2, after the DNS requests are received, the process 200 proceeds to step 220, where the received DNS requests are processed to determine whether the received DNS requests include any suspicious DNS requests. In one example, the determination of the suspicious DNS requests may be performed by the machine learning module 1701 using a SVM model.

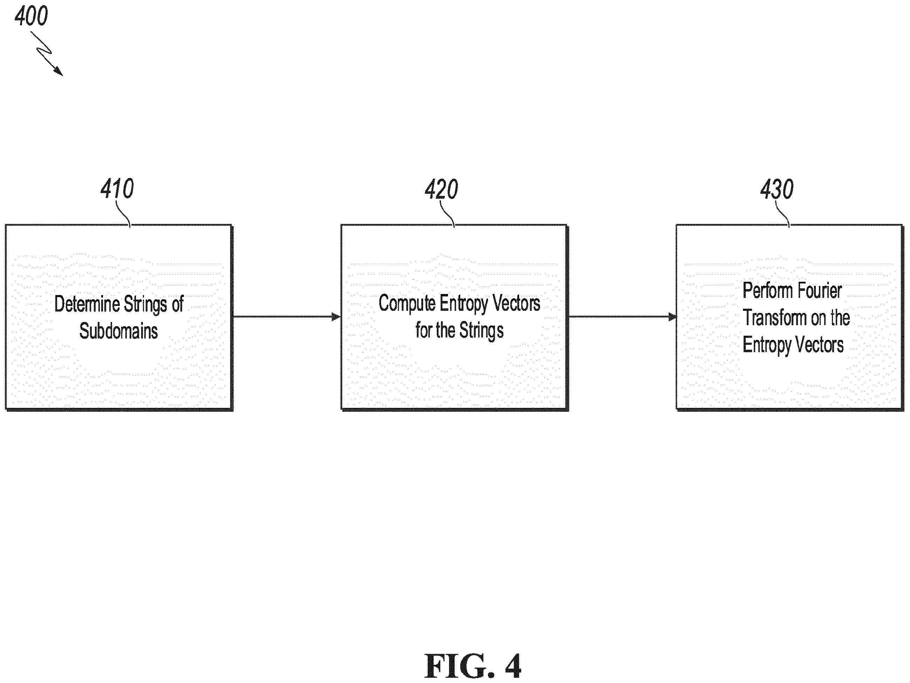

In some cases, the plurality of DNS requests can be processed, e.g. by the system 100, to generate a plurality of transformed vectors to be fed into the SVM model. An example process 400 of generating the transformed vectors is shown in FIG. 4. As shown, at step 410, the plurality of DNS requests may be processed, e.g., by the system 100, to determine a plurality of strings corresponding to a plurality of subdomains included in the DNS requests, respectively. For each string corresponding to a subdomain, the system 100 may determine a number of characters included in the string. Continuing with the above example with reference to FIG. 3, the characters (e.g., symbols, letters, or number) included in the string 310 "f72801043b89e7c0775f9300057567d1e5" may be extracted. Referring back to FIG. 4, at step 420, for each of the characters in a string, an entropy can be computed for the character. An entropy can be used to determine a randomness or measure a disorder level of the character being processed. An entropy vector corresponding to the string may be further computed based on the computed entropies for the string. At step 430, Fourier transform can be performed on the entropy vectors of the strings corresponding to the subdomains to generate transformed vectors. The transformed vectors may be processed by the machine learning module 1701 using the SVM model to determine whether the DNS requests include any suspicious DNS request(s). In some cases, a domain included in a suspicious DNS request can be determined as a suspicious domain.

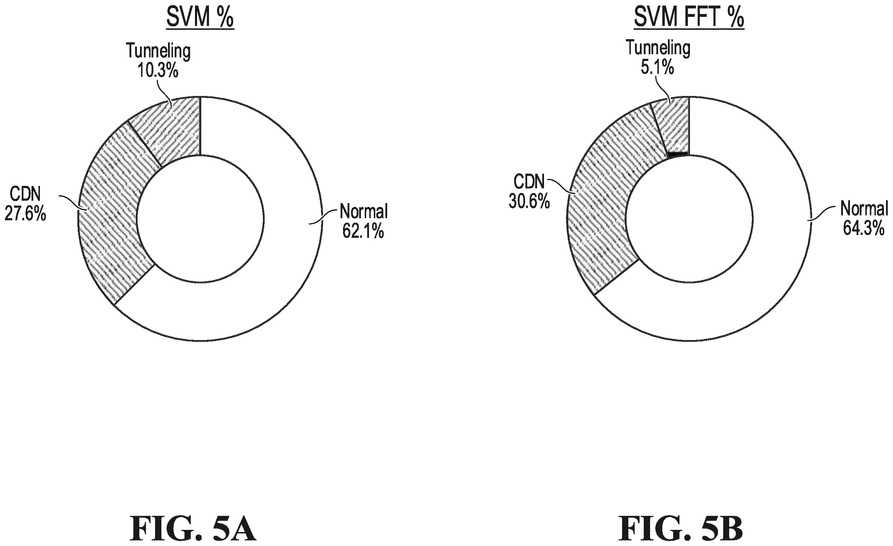

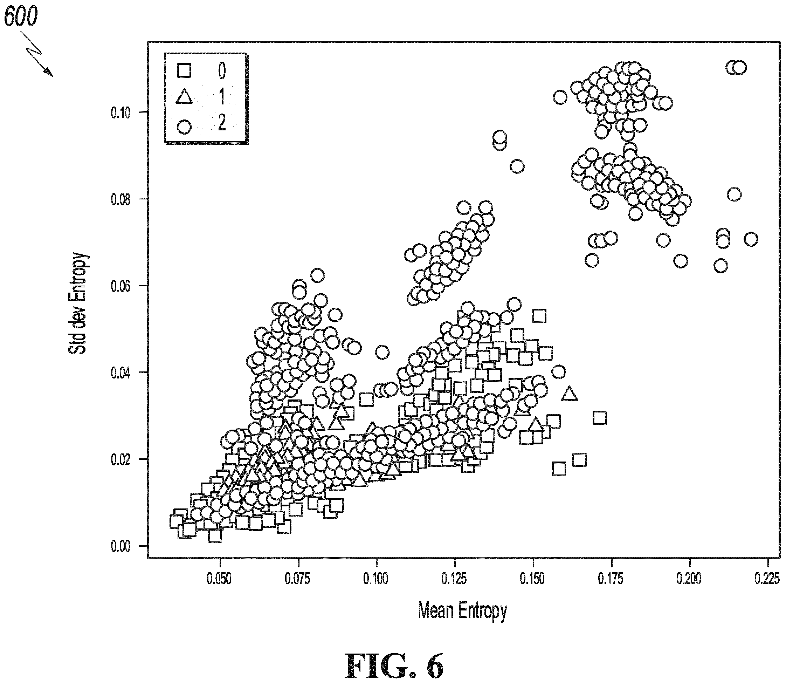

In some cases, a normal domain may be misclassified as a suspicious domain. For example, DNS request including subdomains directed to content delivery networks (CDNs) are among the normal traffics that may be detected as DNST because the CDN subdomains can be abnormally high entropy subdomains. Performing Fourier transform on the entropy vectors and feeding the transformed vectors to the SVM model can improve accuracy in detection of the suspicious domains. FIG. 5A shows a result of DNST detection without the Fourier transform, while FIG. 5B shows a result of DNST detection with the Fourier transform. A comparison of FIG. 5A and 5B shows that a percentage of false positive (e.g., a normal domain misclassified as a suspicious domain) from the DNST detection can be reduced approximately from 10.3% to 5.1% after performing the Fourier transform. The improvement in DNST detection using the Fourier transform in the SVM will be demonstrated further with reference to FIGS. 6-8 below.

FIG. 6 is a graph showing a plot 600 of standard deviation entropy versus mean entropy for DNS requests. As shown, each symbol in the graph represents a DNS request. Squares represent DNS requests that include normal domains. Triangles represent DNS requests that include domains corresponding to content delivery networks (CDNs). Circles represent DNS requests that include suspicious domains. Each DNS request may include a subdomain consisting of multiple characters. Each character may have an associated entropy. The standard deviation entropy may be determined as a variation of the entropies of the characters around a mean of the entropies. As shown, a portion of the circles appear to be mingled with the squares and triangles, indicating a sub-optimal separation of the suspicious domains.

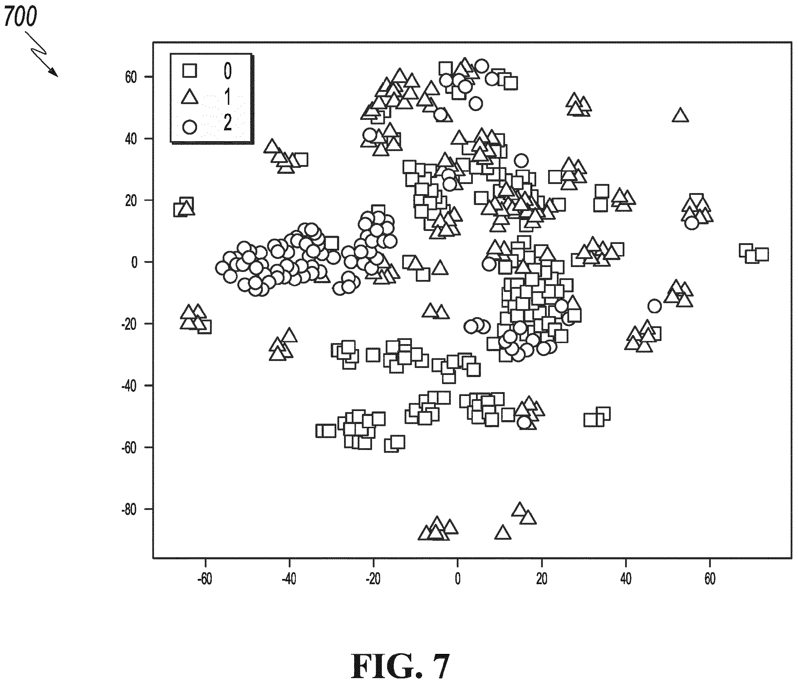

FIG. 7 is a graph showing a t-distributed stochastic neighbor embedding (t-SNE) plot 700 of a plurality of entropy vectors corresponding to a plurality of DNS requests. As shown, each symbol in the graph represents a DNS request. Squares represent DNS requests that include normal domains. Triangles represent DNS requests that include domains corresponding to CDNs. Circles represent DNS requests that include suspicious domains. As shown, a large portion of the circles appear to be apart from the squares and the triangles, indicating improvement in separation of the suspicious domains.

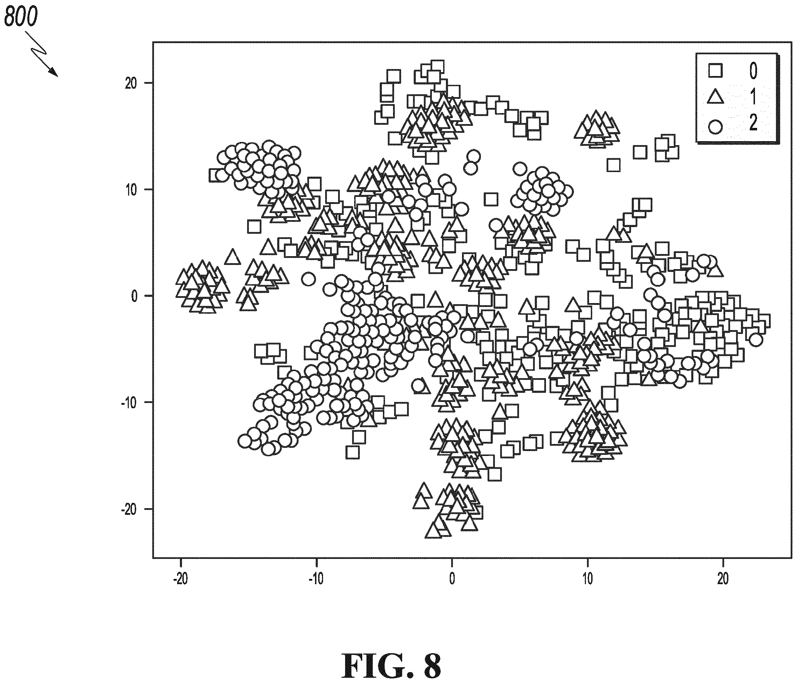

FIG. 8 is a graph showing a t-distributed stochastic neighbor embedding (t-SNE) plot 800 of a plurality of transformed vectors corresponding to a plurality of DNS requests. The transformed vectors are computed by perform Fourier transform on the entropy vectors corresponding to the plurality of DNS requests. As shown, each symbol in the graph represents a DNS request. Squares represent DNS requests that include normal domains. Triangles represent DNS requests that include domains corresponding to CDNs. Circles represent DNS requests that include suspicious domains. By comparing the graphs in FIGS. 6-8, it appears that the blue dots representing the suspicious DNS requests are more distinctly separated from other dots in FIG. 8 than in FIGS. 6 and 7, indicating improvement in separation of the suspicious domains.

Referring back to FIG. 2, at step 230, the one or more suspicious DNS requests are processed to determine whether the one or more suspicious DNS requests are potentially malicious DNS requests. In some cases, the determination of the potentially malicious DNS requests may be performed by the statistical analysis module 1702 using a statistical analysis model. In one example, the statistical analysis module 1702 may process the suspicious DNS requests as determined at step 220 to determine one or more domains included in the suspicious DNS requests. A domain included in a suspicious DNS request may be determined as a suspicious domain. For each suspicious domain, the statistical analysis module 1702 may compute a ratio of unique subdomains to a total number of DNS requests. In some cases, the ratio can be determined as follows. First, a total number of DNS requests observed for a domain in a predetermined time period may be determined. Then, a number of unique subdomains included in the total number of DNS requests may be determined. In one example, the number of unique subdomain for a domain may be determined by counting duplicate subdomains as once and summing up the counting over different subdomains for the domain. The ratio of the number of unique subdomains to the total number of DNS requests may be subsequently determined.

In some cases, the subdomains may be stored by the system 100 for a predetermined time period. To improve storage space efficiency, a Bloom filter of each subdomain may be stored in the system 100. In one example, an empty Bloom filter includes a bit array of n bits that are all set to zero initially. To set the Bloom filter corresponding to a given input, a number of hash functions may be applied to the given input to compute a number of hash values. The hash values may indicate positions of bits in the Bloom filter that will be set to one. The Bloom filter corresponding to the give input may then be generated by setting the bits corresponding to the hash values to one. Storing Bloom filters of the subdomains instead of storing the subdomains can improve space efficiency of the storage of the system 100.

The statistical analysis module 1702 may determine one or more potentially malicious domains among the suspicious domains based on the ratio computed for each suspicious domain. In one example, an arithmetic mean of ratios for all the suspicious domains observed over a predetermined time period is computed. Then, a standard deviation may be computed based on the variation of the computed ratios with respect to the arithmetic mean. A threshold may be determined based on the standard deviation and the arithmetic mean. In one example, the threshold may be determined as equal to arithmetic mean + 3*standard deviation. If a ratio computed for a suspicious domain exceeds the determined threshold, the suspicious domain may be determined as a potentially malicious domain. If a ratio computed for a suspicious domain does not exceed the determined threshold, the suspicious domain may be determined as a normal domain. In some cases, a suspicious DNS request that includes a potentially malicious domain may be determined as a potentially malicious DNS requests.

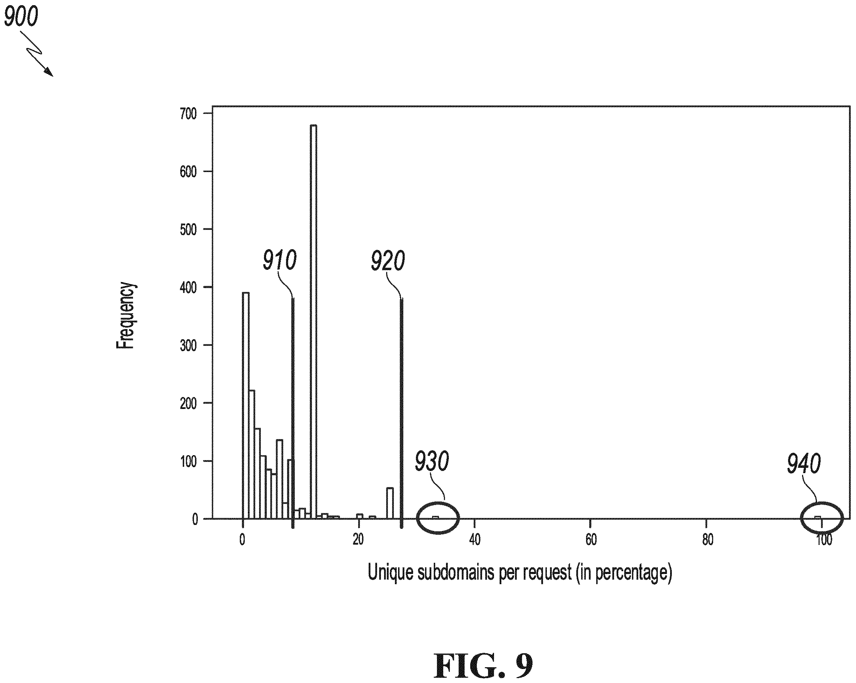

Combining statistical approach with the SVM can improve the accuracy in DNST detection. FIG. 9 is a graph showing a plot 900 of frequency versus unique domains per DNS request (in percentage) that are observed during a predetermined time period. The frequency indicates a probability/occurrence of a domain having a particular ratio. Note that the unique domains per DNS request (in percentage) indicates a ratio of unique domains to total DNS requests observed during the predetermined time period. In the graph 900, the line 910 represents a mean of the ratios computed for suspicious domains observed during the predetermined time period. The line 920 represents a predetermined threshold used to determine potentially malicious domains, where the predetermined threshold may be computed as the mean + 3*standard deviation, and the standard deviation may be computed based on the variation of the computed ratios with respect to the arithmetic mean. Data points beyond the line 920 may be considered potentially malicious domains. In the shown example, the data point 930 and the data point 940 may be both classified as potentially malicious domains. In some cases, the data point 930 may represent a predetermined normal domain and may be misclassified as a potentially malicious domain if the SVM is not used. By combining statistical approach with the SVM, such misclassification can be mitigated.

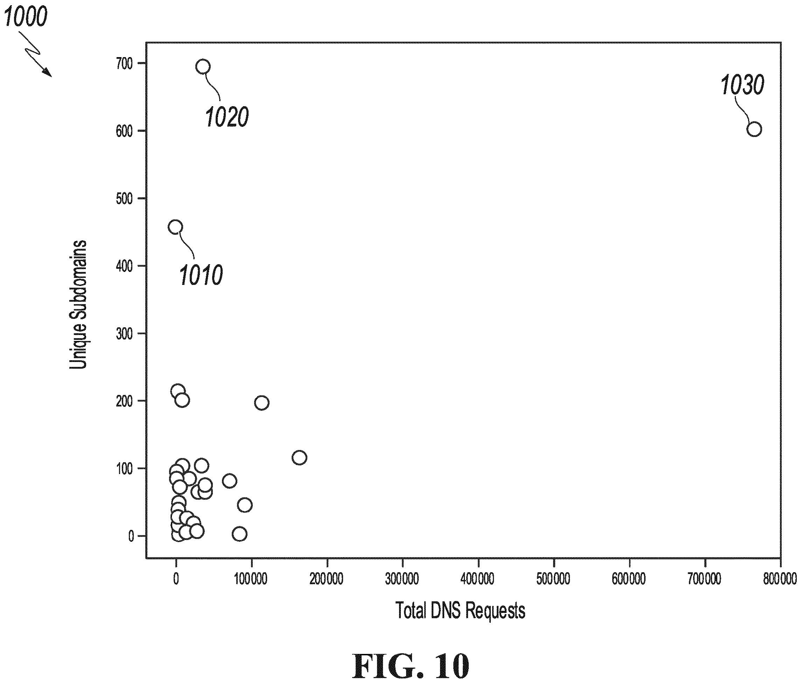

Determination of potentially malicious DNS domains based on the ratio instead of unique subdomains alone can improve accuracy of the DNST detection with reference to FIGS. 10-11 as discussed below. FIG. 10 is a graph showing a plot 1000 of unique subdomains versus total DNS requests for domains. Each point on the plot corresponds to a domain. A position of each point along the x-axis denotes a number of DNS requests observed for a corresponding domain during a predetermined time period. A position of the point along y-axis represents a number of unique subdomains included in the DNS requests. In some cases, point 1010 representing a predetermined malicious domain may be classified as a potentially malicious domain based a determination that a number of unique subdomains corresponding to point 1010 exceeds a predetermined threshold. Points 1020 and 1030 representing predetermined normal domains may be misclassified as potentially malicious domains based a determination that a number of unique subdomains corresponding to points 1020 and 1030 exceeds the predetermined threshold.

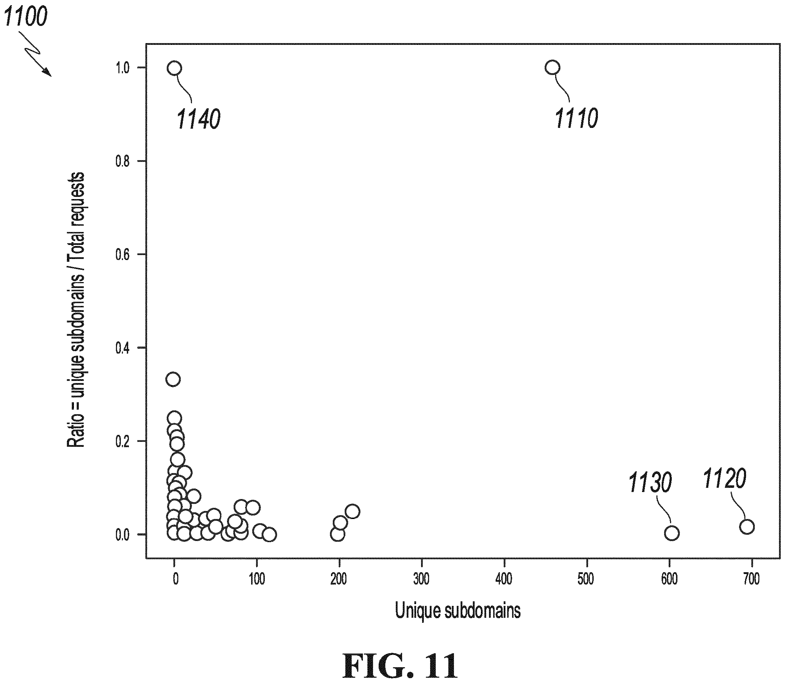

FIG. 11 is a graph showing a plot 1100 of a ratio of unique subdomains to total DNS requests versus the unique domains for domains. Each point on the plot corresponds to a domain. A position of each point along the x-axis denotes a number of unique domains observed for a corresponding domain during a predetermined time period. A position of the point along y-axis represents a ratio of unique subdomains to total DNS requests observed during the predetermined time period. Points 1110, 1120, and 1130 correspond to the points 1010, 1020, and 1030 in FIG. 10, respectively. Point 1110 may be classified as a potentially malicious domain based a determination that a ratio of unique subdomains to total DNS requests corresponding to the point 1110 exceeds a predetermined threshold. Points 1120 and 1130 may not be classified as potentially malicious domains based a determination that a ratio of unique subdomains to total DNS requests corresponding to points 1120 and 1130 does not exceed the predetermined threshold. Note that although a corresponding ratio computed for point 1140 may have exceeded the predetermined threshold, point 1140 may not be classified as potentially malicious domain because the number of unique subdomains observed for point 1140 is too small (e.g., smaller than a predetermined threshold).

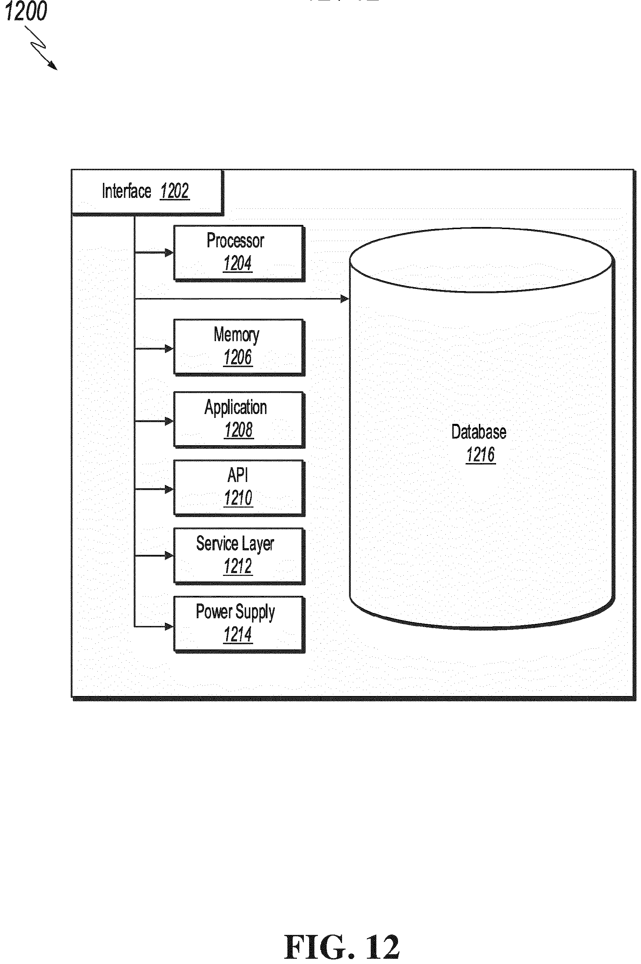

FIG. 12 is a block diagram of an example computer system 1200 used to provide computational functionalities associated with described algorithms, methods, functions, processes, flows, and procedures, as described in the instant disclosure, according to an implementation. The computer system 1200, or more than one computer system 1200, can be used to implement the electronic device described previously in this disclosure, e.g., UE, servers, or other network nodes. In some cases, the computer system 1200 can be implemented as any one of the UE 110, trusted DNS server 120, network gateway 130, name servers 140, web server 150, and DNST detection device 170 of FIG. 1.

In some aspects, the computer 1200 may comprise a computer that includes an input device, such as a keypad, keyboard, touch screen, or other device that can accept user information, and an output device that conveys information associated with the operation of the computer 1200, including digital data, visual, or audio information (or a combination of information), or a graphical user interface (GUI).

The computer 1200 can serve in a role as a client, network component, a server, a database or other persistency, or any other component (or a combination of roles) of a computer system for performing the subject matter described in the instant disclosure. The illustrated computer 1200 can be communicably coupled with a network (not shown). In some implementations, one or more components of the computer 1200 may be configured to operate within environments, including cloud-computing-based, local, global, or other environment (or a combination of environments).

At a high level, the computer 1200 is an electronic computing device operable to receive, transmit, process, store, or manage data and information associated with the described subject matter. According to some implementations, the computer 1200 may also include, or be communicably coupled with, an application server, e-mail server, web server, caching server, streaming data server, or other server (or a combination of servers).

The computer 1200 can receive requests over a network from a client application (for example, executing on another computer 1200) and respond to the received requests by processing the received requests using an appropriate software application(s). In addition, requests may also be sent to the computer 1200 from internal users (for example, from a command console or by other appropriate access methods), external or third-parties, other automated applications, as well as any other appropriate entities, individuals, systems, or computers.

Each of the components of the computer 1200 can communicate using a system bus (not shown). In some implementations, any or all of the components of the computer 1200, hardware or software (or a combination of both hardware and software), may interface with each other or the interface 1202 (or a combination of both), over the system bus using an application programming interface (API) 1210 or a service layer 1212 (or a combination of the API 1210 and service layer 1212). The API 1210 may include specifications for routines, data structures, and object classes. The API 1210 may be either computer-language independent or dependent and refer to a complete interface, a single function, or even a set of APIs. The service layer 1212 provides software services to the computer 1200 or other components (whether or not illustrated) that are communicably coupled to the computer 1200. The functionality of the computer 1200 may be accessible for all service consumers using this service layer. Software services, such as those provided by the service layer 1212, provide reusable, defined functionalities through a defined interface. For example, the interface may be software written in JAVA, C++, or other suitable language providing data in extensible markup language (XML) format or other suitable formats. While illustrated as an integrated component of the computer 1200, alternative implementations may illustrate the API 1210 or the service layer 1212 as stand-alone components in relation to other components of the computer 1200 or other components (whether or not illustrated) that are communicably coupled to the computer 1200. Moreover, any or all parts of the API 1210 or the service layer 1212 may be implemented as child or sub-modules of another software module, enterprise application, or hardware module without departing from the scope of this disclosure.

The computer 1200 includes an interface 1202. Although illustrated as a single interface 1202 in FIG. 12, two or more interfaces 1202 may be used according to particular needs, desires, or particular implementations of the computer 1200. The interface 1202 is used by the computer 1200 for communicating with other systems that are connected to a network in a distributed environment. Generally, the interface 1202 includes logic encoded in software or hardware (or a combination of software and hardware) and is operable to communicate with the network. More specifically, the interface 1202 may include software supporting one or more communication protocols associated with communications such that the network or interface's hardware is operable to communicate physical signals within and outside of the illustrated computer 1200.

The computer 1200 includes one or more processors 1204. Although illustrated as a single processor 1204 in FIG. 12, two or more processors may be used according to particular needs, desires, or particular implementations of the computer 1200. Generally, the processor 1204 executes instructions and manipulates data to perform the operations of the computer 1200 and any algorithms, methods, functions, processes, flows, and procedures as described in the instant disclosure.

The computer 1200 also includes a database 1216 that can hold data for the computer 1200 or other components (or a combination of both) that can be connected to a network (whether illustrated or not). For example, database 1216 can be an in-memory, conventional, or other type of database storing data consistent with this disclosure. In some implementations, database 1216 can be a combination of two or more different database types (for example, a hybrid in-memory and conventional database) according to particular needs, desires, or particular implementations of the computer 1200 and the described functionality. Although illustrated as a single database 1216 in FIG. 12, two or more databases (of the same or combination of types) can be used according to particular needs, desires, or particular implementations of the computer 1200 and the described functionality. While database 1216 is illustrated as an integral component of the computer 1200, in alternative implementations, database 1216 can be external to the computer 1200.

The computer 1200 also includes a memory 1206 that can hold data for the computer 1200 or other components (or a combination of both) that can be connected to the network (whether illustrated or not). For example, memory 1206 can be Random Access Memory (RAM), Read Only Memory (ROM), optical, magnetic, and the like, storing data consistent with this disclosure. In some implementations, memory 1206 can be a combination of two or more different types of memory (for example, a combination of RAM and magnetic storage) according to particular needs, desires, or particular implementations of the computer 1200 and the described functionality. Although illustrated as a single memory 1206 in FIG. 12, two or more memories 1206 (of the same or a combination of types) can be used according to particular needs, desires, or particular implementations of the computer 1200 and the described functionality. While memory 1206 is illustrated as an integral component of the computer 1200, in alternative implementations, memory 1206 can be external to the computer 1200.

The application 1208 is an algorithmic software engine providing functionality according to particular needs, desires, or particular implementations of the computer 1200, particularly with respect to functionality described in this disclosure. For example, application 1208 can serve as one or more components, modules, or applications. Further, although illustrated as a single application 1208, the application 1208 may be implemented as multiple applications 1208 on the computer 1200. In addition, although illustrated as integral to the computer 1200, in alternative implementations, the application 1208 can be external to the computer 1200.

The computer 1200 can also include a power supply 1214. The power supply 1214 can include a rechargeable or non-rechargeable battery that can be configured to be either user- or non-user-replaceable. In some implementations, the power supply 1214 can include power-conversion or management circuits (including recharging, standby, or other power management functionality). In some implementations, the power supply 1214 can include a power plug to allow the computer 1200 to be plugged into a wall socket or other power source to, for example, power the computer 1200 or recharge a rechargeable battery.

There may be any number of computers 1200 associated with, or external to, a computer system containing computer 1200, each computer 1200 communicating over a network. Further, the term "client," "user," and other appropriate terminology may be used interchangeably, as appropriate, without departing from the scope of this disclosure. Moreover, this disclosure contemplates that many users may use one computer 1200, or that one user may use multiple computers 1200.

It is expressly understood that the described implementations of the subject matter can include one or more features, alone or in combination. For example, in an implementation, a plurality of domain name system (DNS) requests to access one or more domains are received. The plurality of DNS requests are processed, by using a support vector machine (SVM) model, to determine one or more suspicious DNS requests among the plurality of DNS requests. The one or more suspicious DNS requests are processed, by using a statistical analysis model, to determine whether the one or more suspicious DNS requests are potentially malicious DNS requests.

The foregoing and other described aspects may be implemented using a system, a method, or a computer program, or any combination of systems, methods, and computer programs. The foregoing and other described embodiments can each, optionally, include one or more of the following features. It is contemplated that these features may be combined with one or more of the forgoing implementations.

A first feature, combinable with any of the following features, includes: determining a plurality of strings corresponding to a plurality of subdomains comprised in the plurality of DNS requests, respectively; determining a plurality of entropy vectors corresponding to the plurality of strings; and determining, by using a SVM model, one or more suspicious DNS requests based on the plurality of entropy vectors.

A second feature, combinable with any of the above and the following features, includes: for each of the plurality of strings corresponding to a DNS request, determining a plurality of characters comprised in a string; compute an entropy for each of the plurality of characters; and compute an entropy vector for the string based a plurality of entropies computed for the plurality of characters.

A third feature, combinable with any of the above and the following features, includes: performing Fourier transform on the plurality of entropy vectors to generate a plurality of transformed vectors; and processing, by using the SVM model, the plurality of transformed vectors to determine the one or more suspicious DNS requests.

A fourth feature, combinable with any of the above and the following features, includes: determining, as one or more suspicious domains, one or more domains comprised in the one or more suspicious DNS requests; for each of the one or more suspicious domains, determining a ratio of unique subdomains associated with a suspicious domain to a total number of DNS requests associated with the suspicious domain; determining at least one potentially malicious domain among the one or more suspicious domains based on a ratio corresponding to each of the one or more suspicious domains; and determining whether the one or more suspicious DNS requests are potentially malicious DNS requests by determining whether the one or more suspicious DNS requests comprise the at least one potentially malicious domain.

A fifth feature, combinable with any of the above and the following features, includes: for each of the one or more suspicious domains, determining the total number of DNS requests associated with a suspicious domain within a predetermined time period; determining a number of unique subdomains comprised in the total number of DNS requests associated with the suspicious domain; and determining a ratio of the number of unique subdomains to the total number of DNS requests associated with the suspicious domain.

A sixth feature, combinable with any of the above features, includes: in response to determining a suspicious DNS request is a potentially malicious DNS request, declining the suspicious DNS request.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine- generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatus with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

The processes and logic flows described in this specification can be performed by one or more programmable computers, executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a ROM or a RAM or both. The essential elements ofa computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a PDA, a mobile audio or video player, a game console, a GPS receiver, or a portable storage device, e.g., a USB flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically erasable programmable read- only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD, LED, or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., such as a data server, or that includes a middleware component, e.g., an application server, or that includes a front-end component, e.g., a client computer having a graphical user interface or a Web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a WLAN using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship with each other. In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub- modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking and parallel processing may be advantageous.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Accordingly, the above description of example implementations does not define or constrain this disclosure. Other changes, substitutions, and alterations are also possible without departing from the spirit and scope of this disclosure.

## Claims

1. A method, comprising:
receiving a plurality of domain name system (DNS) requests to access one or more domains;
processing, by using a machine learning model, the plurality of DNS requests to determine one or more suspicious DNS requests among the plurality of DNS requests; and
processing, by using a statistical analysis model, the one or more suspicious DNS requests to determine whether the one or more suspicious DNS requests are potentially malicious DNS requests.

2. The method of claim 1, wherein processing, by using the machine learning model, the plurality of DNS requests to determine the one or more suspicious DNS requests comprises:
determining a plurality of strings corresponding to a plurality of subdomains comprised in the plurality of DNS requests, respectively;
determining a plurality of entropy vectors corresponding to the plurality of strings; and
determining, by using the machine learning model, one or more suspicious DNS requests based on the plurality of entropy vectors.

3. The method of claim 2 or 3, wherein determining the plurality of entropy vectors corresponding to the plurality of strings comprises:
for each of the plurality of strings corresponding to a DNS request,
determining a plurality of characters comprised in a string;
computing an entropy for each of the plurality of characters; and
computing an entropy vector for the string based a plurality of entropies computed for the plurality of characters.

4. The method of claim 2, wherein determining, by using the machine learning model, the one or more suspicious DNS requests based on the plurality of entropy vectors comprises:
performing Fourier transform on the plurality of entropy vectors to generate a plurality of transformed vectors; and
processing, by using the machine learning model, the plurality of transformed vectors to determine the one or more suspicious DNS requests.

5. The method of claim 1, wherein processing, by using the statistical analysis model, the one or more suspicious DNS requests to determine whether the one or more suspicious DNS requests are potentially malicious DNS requests comprises:
determining, as one or more suspicious domains, one or more domains comprised in the one or more suspicious DNS requests;
for each of the one or more suspicious domains, determining a ratio of unique subdomains associated with a suspicious domain to a total number of DNS requests associated with the suspicious domain;
determining at least one potentially malicious domain among the one or more suspicious domains based on a ratio corresponding to each of the one or more suspicious domains; and
determining whether the one or more suspicious DNS requests are potentially malicious DNS requests by determining whether the one or more suspicious DNS requests comprise the at least one potentially malicious domain.

6. The method of claim 5, wherein determining the ratio of unique subdomains associated with a suspicious domain to a total number of DNS requests associated with the suspicious domain comprises:
for each of the one or more suspicious domains,
determining the total number of DNS requests associated with a suspicious domain within a predetermined time period;
determining a number of unique subdomains comprised in the total number of DNS requests associated with the suspicious domain; and
determining a ratio of the number of unique subdomains to the total number of DNS requests associated with the suspicious domain.

7. The method of any one of claims 1 to 6, wherein the machine learning model comprises a support vector machine (SVM) model.

8. A computer-implemented system, wherein the computer-implemented system comprises:
one or more computers; and
one or more computer memory devices interoperably coupled with the one or more computers and having machine-readable media storing one or more instructions that, when executed by the one or more computers, perform one or more operations comprising:
receiving a plurality of domain name system (DNS) requests to access one or more domains;
processing, by using a machine learning model, the plurality of DNS requests to determine one or more suspicious DNS requests among the plurality of DNS requests; and
processing, by using a statistical analysis model, the one or more suspicious DNS requests to determine whether the one or more suspicious DNS requests are potentially malicious DNS requests.

9. The computer-implemented system of claim 8, wherein processing, by using the machine learning model, the plurality of DNS requests to determine the one or more suspicious DNS requests comprises:
determining a plurality of strings corresponding to a plurality of subdomains comprised in the plurality of DNS requests, respectively;
determining a plurality of entropy vectors corresponding to the plurality of strings; and
determining, by using the machine learning model, one or more suspicious DNS requests based on the plurality of entropy vectors.

10. The computer-implemented system of claim 9, wherein determining the plurality of entropy vectors corresponding to the plurality of strings comprises:
for each of the plurality of strings corresponding to a DNS request,
determining a plurality of characters comprised in a string;
computing an entropy for each of the plurality of characters; and
computing an entropy vector for the string based a plurality of entropies computed for the plurality of characters.

11. The computer-implemented system of claim 9 or 10, wherein determining, by using the machines learning model, the one or more suspicious DNS requests based on the plurality of entropy vectors comprises:
performing Fourier transform on the plurality of entropy vectors to generate a plurality of transformed vectors; and
processing, by using the machine learning model, the plurality of transformed vectors to determine the one or more suspicious DNS requests.

12. The computer-implemented system of claim 8, wherein processing, by using the statistical analysis model, the one or more suspicious DNS requests to determine whether the one or more suspicious DNS requests are potentially malicious DNS requests comprises:
determining, as one or more suspicious domains, one or more domains comprised in the one or more suspicious DNS requests;
for each of the one or more suspicious domains, determining a ratio of unique subdomains associated with a suspicious domain to a total number of DNS requests associated with the suspicious domain;
determining at least one potentially malicious domain among the one or more suspicious domains based on a ratio corresponding to each of the one or more suspicious domains; and
determining whether the one or more suspicious DNS requests are potentially malicious DNS requests by determining whether the one or more suspicious DNS requests comprise the at least one potentially malicious domain.

13. The computer-implemented system of claim 12, wherein determining the ratio of unique subdomains associated with a suspicious domain to a total number of DNS requests associated with the suspicious domain comprises:
for each of the one or more suspicious domains,
determining the total number of DNS requests associated with a suspicious domain within a predetermined time period;
determining a number of unique subdomains comprised in the total number of DNS requests associated with the suspicious domain; and
determining a ratio of the number of unique subdomains to the total number of DNS requests associated with the suspicious domain.

14. The computer-implemented system of any one of claims 8 to 13, wherein the machine learning model comprises a support vector machine (SVM) model.

15. A computer readable medium, wherein the computer readable medium stores instructions for execution by one or more computers to perform the method of any one of claims 1 to 7.
